Europäisches Patentamt

European Patent Office

Office européen des brevets

(11) Publication number: **0 364 655**
**A2**

## (12) EUROPEAN PATENT APPLICATION

(21) Application number: 89103491.0

(22) Date of filing: 28.02.89

(51) Int. Cl.5: **B62B 3/10**

(30) Priority: 19.10.88 IT 2236188

(43) Date of publication of application:
25.04.90 Bulletin 90/17

(84) Designated Contracting States:
**BE DE ES FR GB IT**

(71) Applicant: **I.M.PAS S.r.l.**
**Viale Europa 6**
**I-25040 Monticelli Brusati (Brescia)(IT)**

(72) Inventor: **Brangi, Giuseppe**
**Via Vivaldi 14**
**I-25100 Brescia(IT)**

(74) Representative: **Modiano, Guido et al**
**MODIANO, JOSIF, PISANTY & STAUB**
**Modiano & Associati Via Meravigli, 16**
**I-20123 Milano(IT)**

(54) **Trolley with modular elements particularly for supermarkets and the like.**

(57) A trolley comprises a wheeled base frame (2) with which a basket (3) is associated, the basket comprises a central element (20) which defines the bottom (21) and the front face (22); side panels (30) can be arranged to the sides of said central element. The side panels are joined to the central element, in the front portion, by means of mechanical coupling means (35,36) and, in the rear portion, by means of side plates (40) to which the central element is removably fixable. A transverse frame (50) stiffening element is coupled to said side plates and is arranged below the basket.

Fig.1

EP 0 364 655 A2

# TROLLEY WITH MODULAR ELEMENTS PARTICULARLY FOR SUPERMARKETS AND THE LIKE

The present invention relates to a trolley with modular elements particularly for supermarkets and the like.

As is known, trolleys conventionally used in supermarkets and shops are usually constituted by a wheeled base frame which supports a basket. The base frame and the basket have a tapered front so as to insert the trolleys into one another when they are not in use.

In known trolleys the basket is manufactured by means of mutually crossed and welded rods which in practice produce a monolithic assembly.

This solution has various disadvantages, among which the first is that manufacturing a monolithic basket requires welding operations to be executed in positions which are not always easily accessible.

Furthermore, another severe disadvantage resides in the fact that if any component of the trolley is damaged, for example because of a collision, it is necessary to replace the entire basket and not just the damaged part.

The aim proposed by the invention is to eliminate the described disadvantages by providing a trolley with modular elements, particularly for supermarkets and the like, which allows to remove with relative ease any damaged parts, replacing them with other undamaged ones.

An object of the present invention is to provide a trolley having component parts of relatively reduced dimensions which are easy and rapid to assemble to one another.

A further object of the present invention is to provide a trolley with modular elements which allows to obtain a precise and easy mutual insertion of the trolleys, both the base frame and the basket having a configuration which allows a good "interpenetration" of the trolleys into one another.

Not least object of the present invention is to provide a trolley with modular elements which, by virtue of its peculiar constructive characteristics, besides giving the greatest assurances of reliability and safety in use, is advantageous from a merely economical point of view.

The above described aim, as well as the mentioned objects and others which will become apparent hereinafter, are achieved by a trolley with modular elements, particularly for supermarkets and the like, comprising a wheeled base frame with which a basket is associated, characterized in that said basket comprises a central element, defining the bottom and the front face, side elements being arrangeable laterally to said central element, said side elements being joined to said central element, in the front portion, by mechanical coupling means and, in the rear portion, by means of side plates to which said central element is removably fixable, at least one transverse element for reinforcing said frame being coupled to said plates, said element being arranged below said basket.

Further characteristics and advantages will become apparent from the description of a preferred but not exclusive embodiment of a trolley with modular elements, particularly for supermarkets and the like, illustrated only by way of non-limitative example in the accompanying drawings, wherein:

figure 1 is an exploded perspective view of the trolley with modular elements, according to the invention;

figure 2 is a schematic exploded lateral elevation view of the trolley;

figure 3 is a lateral elevation view of the assembled trolley;

figure 4 is a schematic view of a different embodiment of the coupling of the side elements and of the base frame;

figure 5 is a top plan view of the trolley;

figure 6 is a schematic exploded view of the detail of the grip element;

figure 7 is a sectional view taken along the line VII-VII of figure 6;

figure 8 is a schematic exploded perspective view of the means for mechanical coupling to the covering corner element, said means being intended for coupling the side elements to the front face;

figure 9 is an outside view of the covering corner element;

figure 10 is an inside view of the covering corner element;

figure 11 is a schematic outside view of the downwardly located covering corner element;

figure 12 is a sectional view taken along the line XII-XII of figure 9.

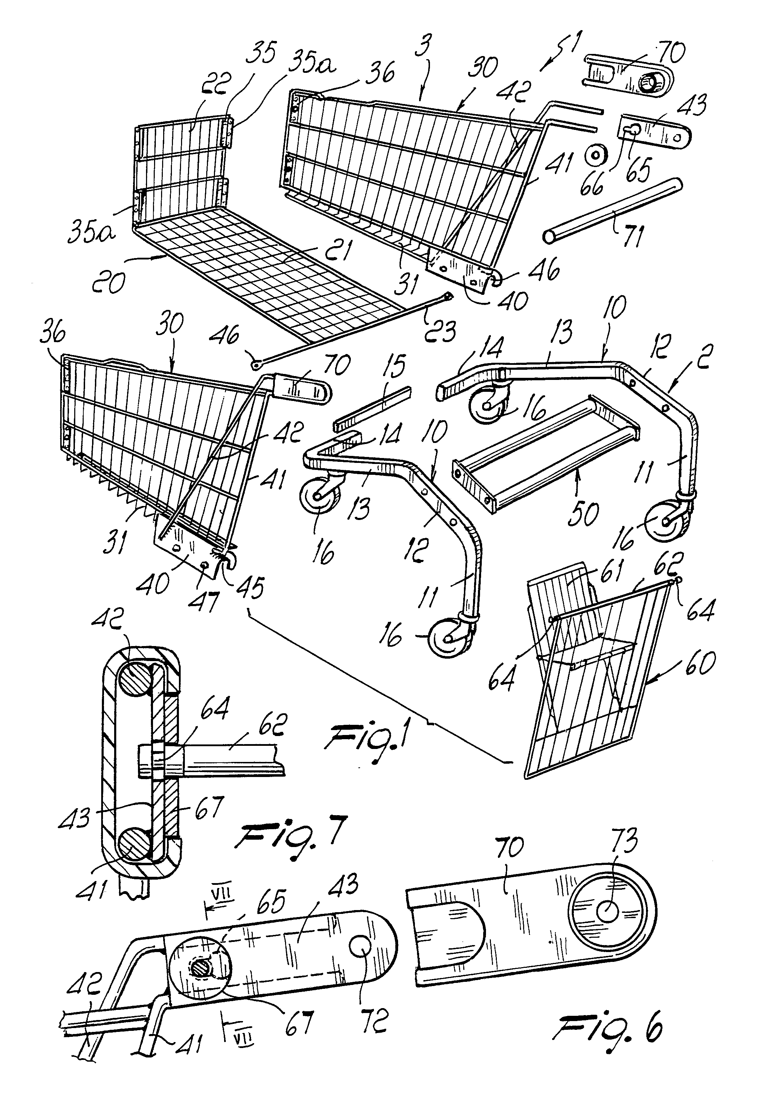

With reference to the above described figures, the trolley with modular elements, particularly for supermarkets and the like, generally indicated by the reference numeral 1, comprises a frame 2, which supports a basket 3.

The frame 2 is provided by means of a pair of shaped tubular elements, indicated by the reference numeral 10, each having a rear portion 11 connected to a central portion 12 which leads to a downwardly sloping front portion 13 having a front portion 14 which is bent substantially at a right angle.

The front portions 14 can be joined to one another, e.g. by inserting a coupling 15, which is fixable with mechanical means such as for example rivets, screws, clinchings and the like.

Conventional castors 16 are provided at the rear portion 11 and proximate to the front portion 14.

The frame, as is known, has a tapered front part, so as to allow the mutual insertion of the trolleys when they are not being used.

The basket 3 is constituted by a central element, generally indicated by the reference numeral 20, which is obtained by means of crossed and mutually welded rods and defines a bottom 21 and a front part 22 having a substantially constant width; the front part 22 is folded substantially at a right angle to the bottom 21.

A laterally protruding crosspiece 23 is coupled at the rear free edge of the bottom 21.

Side elements, generally indicated by the reference numeral 30, are associable with the central element 20 and have a conventional substantially trapezoidal configuration; these too are obtained from mutually crossed and welded rods; the side elements 3 furthermore have a lower wing 31 with decreasing width in the front part, so as to impart to the basket the forwardly tapering configuration which allows the mutual insertion of the trolleys.

An important peculiarity of the invention resides in the fact that the side elements 30 are removably associable with the central element 20 so as to allow to replace only those elements which are damaged.

In order to provide this coupling, corner elements 35 are associated at the lateral edges of the front face 22, preferably by welding, and have a wing directed towards the side elements which correspondingly have plates 36 which are associable with the wing 35a by means of rivets or of mechanical coupling means of any kind.

Plates 40 are rigidly associated with the side elements at their rear region, and the ends of the rear upright 41 and of the inclined upright 42, which upwardly converge into a grip plate, indicated by the reference numeral 43, are welded to said plates 40.

At the rear edge, said plates 40 furthermore define a loop 45 through which the crosspiece 23 is insertable; at its free end said crosspiece has an eyelet 46 which can be located at a through hole 47 defined on the plates 40.

The securing of the side elements to the central element is obtained by means of couplings, with screws or similar elements, to a transverse element 50 which mutually joins the tubular elements 10 which constitute the base frame and is locked with screws to the plates 40 so as to couple the side elements, as well as the central element, by bending the end portion of the crosspiece 23.

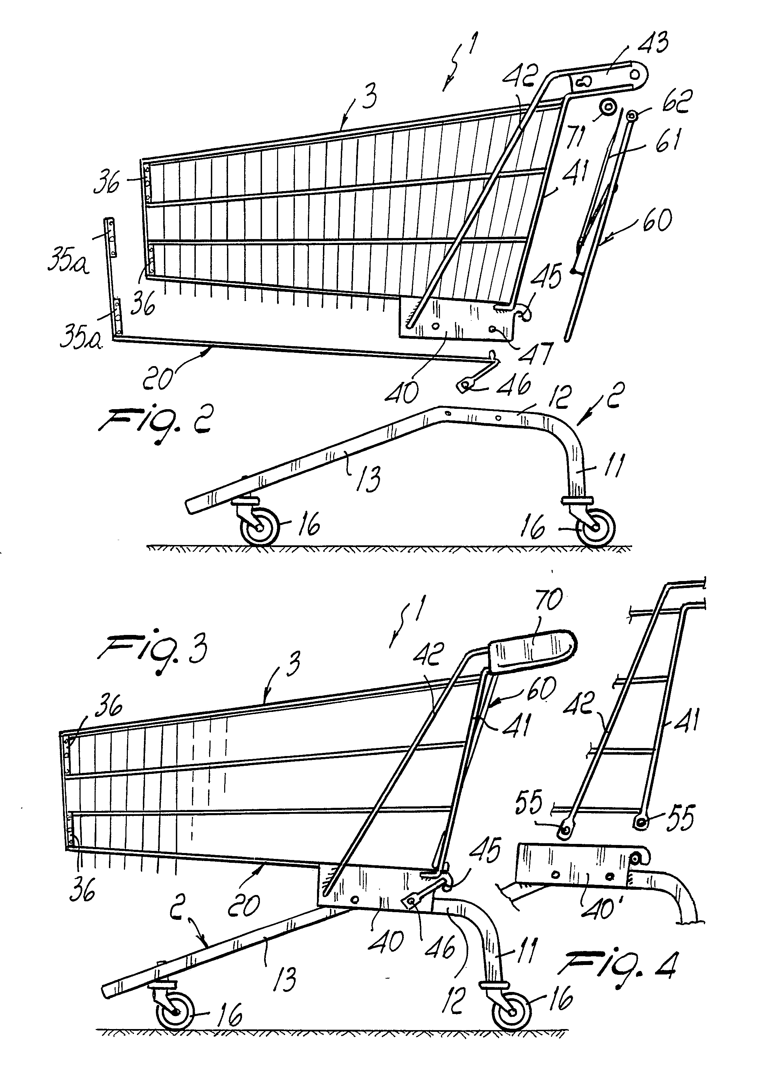

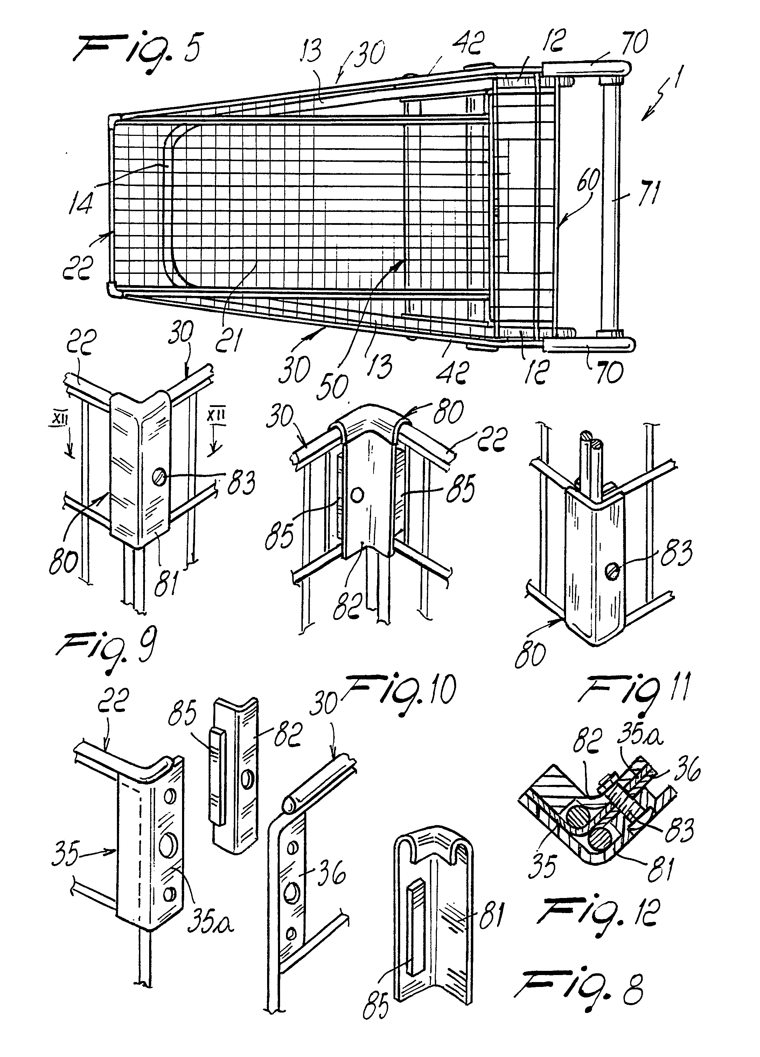

According to a different embodiment, illustrated in figure 4, the plates, now indicated by the reference numeral 40', are welded to the base frame and more precisely to each tubular element 10. In order to execute the coupling, the upright 41 and the inclined upright 42 have holes 55 at their ends, and the bolts for fixing to the transverse element 50 are insertable in said holes; the crosspiece 23 furthermore has an end with a threaded portion for its engagement with a bolt for its locking to the plates 40'.

The basket is completed by a rear swivelling wall 60, possibly having a seat 61, which upwardly has a transverse pivot 62 which engages with the grip plates 43. The transverse pivot 62 is coupled by means of grooves 64 defined at the free ends of the pivot which insert into the widened portion 65 and can be locked by inserting the groove 64 in the narrow portion 66 of the slot defined on the grip plates 43.

Washers 67 acting as spacer elements are advantageously provided at the coupling region on the transverse pivot 62, and their fixing in position is obtained by means of cap elements 70 which fit over the plates 43 and consequently prevent the translatory motion of the transverse pivot 62 and consequently keep the rear wall 60 in position, said rear wall being mounted with the possibility of swivelling towards the inside of the basket to allow the mutual insertion of the trolleys.

The cap elements 70 support the grip element 71, generally constituted by a tubular element, fixed by means of transverse screws engaging in the hole 72 defined by the plates 43 and by the corresponding hole 73 defined by the cap elements 70, which are thus fixed to said plates 43.

Covering corner elements, generally indicated by the reference numeral 80, are provided in the front coupling region between the central element 20 and the side elements 30, and have an outer shell 81 arrangeable at the outside portion of the corner and an inner shell 82 correspondingly arrangeable on the inside and lockable, with respect to the outer shell, by means of a screw or of similar elements indicated by the reference numeral 83. The shells 81 and 82 have, on their inner faces, shimming elements 85 which perform the fixing and, by coupling between the plates 35 and 36, allow the precise securing of the corner covering element which has the function both of hiding the coupling region from view and of acting as shock-absorbing element during collisions or the like at the front face of the trolley.

From the above description it is thus apparent that the trolley achieves the proposed aim and objects, and in particular the fact is stressed that if a part of the basket or possibly of the frame is damaged it is possible to easily remove the mechanical couplings, replacing exclusively the damaged part and not the entire basket or the entire base frame.

The adopted structure furthermore considerably simplifies all the assembly operations, which are executable in relatively short times.

The invention thus conceived is susceptible to numerous modifications and variations, all of which are within the scope of the inventive concept.

Furthermore all the details may be replaced with other technically equivalent elements.

In practice, the materials employed, so long as compatible with the specific use, as well as the contingent shapes and dimensions, may be any according to the requirements.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Trolley with modular elements, particularly for supermarkets and the like, comprising a wheeled base frame with which a basket is associated, characterized in that said basket comprises a central element, defining the bottom and the front face, side elements being arrangeable laterally to said central element, said side elements being joined to said central element, in the front portion, by mechanical coupling means and, in the rear portion, by means of side plates to which said central element is removably fixable, at least one transverse element for reinforcing said frame being coupled to said plates, said element being arranged below said basket.

2. Trolley, according to claim 1, characterized in that said frame comprises a pair of tubular elements, each having a rear portion leading to a central portion in turn connected to a downwardly sloping front portion, from which there extends a front portion arranged substantially perpendicular to the remaining part of said tubular element, a joint for coupling said frame being insertable between said front portions.

3. Trolley, according to the preceding claims, characterized in that said wheels are respectively connected at the end of said rear portions and in the coupling region of said front portions.

4. Trolley, according to one or more of the preceding claims, characterized in that said central element has a substantially constant width and said front face is arranged substantially perpendicular with respect to the plane of arrangement of said bottom, said bottom having, at its free end, a laterally protruding crosspiece.

5. Trolley, according to one or more of the preceding claims, characterized in that said side elements have a lower wing associable with the longitudinal edges of said bottom and having a width which decreases towards their front part.

6. Trolley, according to one or more of the preceding claims, characterized in that said front face has, at its lateral edges, corner plates having a wing facing corresponding plates fixed to said side elements.

7. Trolley, according to one or more of the preceding claims, characterized in that said side plates are rigidly connected to said side elements, the ends of a rear upright of said side element and of an inclined upright being rigidly associated with said plates, said ends mutually merging into a grip plate, said side plate defining a loop in which said crosspiece is insertable, said crosspiece having a folded end with slots for coupling to a fixing means passing in a hole defined on said side plates.

8. Trolley, according to one or more of the preceding claims, characterized in that through means couple said side plates to said tubular elements of said frame and to said at least one transverse element.

9. Trolley, according to one or more of the preceding claims, characterized in that said side plates are rigidly associated with said tubular elements of said frame, said rear upright and said inclined upright having, at their free ends, through holes for engagement with means for mechanical coupling to said frame.

10. Trolley, according to one or more of the preceding claims, characterized in that it comprises a rear swivelling wall of said basket, upwardly having a transverse pivot associable with said grip plates, said transverse pivot having, at its free ends, grooves associable with the narrow part of a slot having a widened portion for inserting said transverse pivot.

11. Trolley, according to one or more of the preceding claims, characterized in that said transverse pivot is retained in position by a cap element insertable over said grip plates, said cap element having a through hole aligned with a through hole provided correspondingly on said grip plates, means for fixing a grip element being insertable between said through holes.

12. Trolley, according to one or more of the preceding claims, characterized in that it comprises a corner element for covering the mechanical coupling means provided in the front part of said side elements and of said front face, said covering corner element comprising an outer shell and inner shell, said shells being mutually lockable.

13. Trolley, according to one or more of the preceding claims, characterized in that said inner and outer shells have shimming means associable with said corner plate and said plate.

Fig.1

Fig.7

Fig.6

Fig. 2

Fig. 3

Fig. 4

*Fig. 5*

*Fig. 9*

*Fig.10*

*Fig 11*

*Fig. 12*

*Fig. 8*